**Europäisches Patentamt**

(19) **European Patent Office**

**Office européen des brevets**

(11) Numéro de publication: **0 229 804**
**B1**

(12) **FASCICULE DE BREVET EUROPEEN**

(45) Date de publication du fascicule du brevet: **12.09.90**

(51) Int. Cl.⁵: **A 47 J 36/28**

(21) Numéro de dépôt: **86904221.8**

(22) Date de dépôt: **16.07.86**

(86) Numéro de dépôt international:
**PCT/FR86/00253**

(87) Numéro de publication internationale:
**WO 87/00409 29.01.87 Gazette 87/03**

(54) **BARQUETTE ALIMENTAIRE COMPORTANT UN DISPOSITIF DE RECHAUFFAGE PAR REACTION EXOTHERMIQUE DE DEUX PRODUITS REACTIFS.**

(30) Priorité: **23.07.85 FR 8511352**

(43) Date de publication de la demande:
**29.07.87 Bulletin 87/31**

(45) Mention de la délivrance du brevet:
**12.09.90 Bulletin 90/37**

(84) Etats contractants désignés:
**AT BE CH DE FR GB IT LI LU NL SE**

(56) Documents cités:
**EP-A-0 031 523**
**EP-A-0 079 286**
**CH-A- 553 692**
**FR-A-2 348 121**
**US-A-3 094 981**

(73) Titulaire: **DOUKHAN, Jacques**
**15, rue Vincent Rouillé**
**F-56000 Vannes (FR)**

(73) Titulaire: **BOURGUEIL, Yves**
**Kerverho**
**F-56610 Arradon (FR)**

(72) Inventeur: **DOUKHAN, Jacques**
**15, rue Vincent Rouillé**
**F-56000 Vannes (FR)**
Inventeur: **BOURGUEIL, Yves**
**Kerverho**
**F-56610 Arradon (FR)**

(74) Mandataire: **Dubreuil, Annie**
**Cabinet DUBREUIL Le Suffren 23 rue des**
**Peupliers**
**F-56100 Lorient (FR)**

Courier Press, Leamington Spa, England.

**Description**

L'invention concerne une barquette alimentaire comportant un dispositif de réchauffage par réaction exothermique de deux produits réactifs.

Il est connu de réchauffer notamment des aliments, préparations culinaires, boissons... grâce à la réaction exothermique par exemple de chauxvive et d'eau. Si le principe est simple, parce que basé sur une réaction chimique dont on connaît l'équation, en revanche, l'application pratique l'est beaucoup moins. De nombreux dispositifs ont été proposés, mais tous se heurtent à quelques problèmes majeurs: la sécurité de fonctionnement d'une part, et l'efficacité d'autre part.

Par exemple, la demande de brevet européen 0079286, basée sur un concept de réchauffement des aliments essentiellement obtenu au moyen de la vapeur d'eau émise durant la réaction exothermique, décrit la combinaison des moyens, cette combinaison étant axée sur la meilleure circulation de la dite vapeur d'eau au niveau du récipient alimentaire. Cette vapeur d'eau s'avère insuffisante, sous réserve de rester dans des limites d'encombrement raisonnable, pour chauffer suffisamment les aliments.

Le brevet américain 3094981 décrit un dispositif qui nécessite de percer des trous dans le fond du réchaud pour pouvoir y verser de l'eau. Dans ce cas, ni la sécurité ni l'efficacité ne paraissent assurées.

Il convient alors de noter qu'en ce qui concerne la sécurité de fonctionnement, il faut d'une part que la réaction se produise notamment sans risque de brûlure pour l'utilisateur d'autre part que le produit à consommer soit isolé de manière étanche par rapport aux produits réactifs, et enfin qu'il y ait une bonne conservation de ce produit grâce à une isolation, également la plus étanche possible, du milieu extérieur.

Quant à l'efficacité, tout se joue au niveau de la réaction elle-même qui doit être totale, avec des échanges thermiques optimisés entre le réchaud et les aliments.

La présente invention a pour but de résoudre tous ces problèmes. Elle concerne plus précisément une barquette alimentaire équipée d'un réchaud autonome fiable et efficace, dans laquelle le produit à réchauffer est parfaitement protégé contre toute agression des produits réactifs, mais en revanche, parfaitement en contact thermique avec les calories issues de la réaction exothermique, sans qu'il soit fait appel pour ce réchauffement à la vapeur d'eau émise lors de la réaction qui, d'ailleurs, ne se produit que pendant un temps très court et s'avère insuffisante.

Elle concerne également une telle barquette se prêtant à une fermeture étanche de l'ensemble qui assure sa bonne conservation.

Elle concerne enfin une barquette coopérant avec un emballage isolant (jupe externe) qui permet à l'utilisateur de manipuler, sans risque de brûlure, la barquette pendant et après le réchauffement.

L'invention concerne plus précisément une barquette alimentaire comportant un dispositif de réchauffage par réaction exothermique de deux produits réactifs, la dite barquette étant divisée en deux parties recevant respectivement un réchaud et un récipient alimentaire séparés l'un de l'autre, mais en contact intime l'un avec l'autre au moyen d'un opercule bon conducteur de la chaleur, le dit récipient alimentaire épousant le profil intérieur de la partie (B) et étant lui-même fermé par un couvercle constituant de manière étanche un isolement entre le milieu extérieur et le contenu du récipient alimentaire, barquette caractérisée en ce que le réchaud contient à la fois le réactif et un pochon d'eau muni de moyens d'ouverture, l'opercule fermant hermétiquement le réchaud, l'opercule et les moyens d'ouverture du pochon d'eau étant disposés d'une manière telle que l'enceinte du réchaud contenant le réactif et le pochon d'eau reste close après l'ouverture du pochon d'eau, de telle sorte que, dès le déclenchement de la réaction exothermique, cette opercule confine la vapeur d'eau dans la dite enceinte du réchaud pour favoriser le bon déroulement de la réaction et est plaquée contre le fond du récipient alimentaire sous l'action de la masse du mélange réactif en expansion assurant de la sorte une bonne conduction des calories vers les aliments contenus dans le récipient.

L'invention sera mieux comprise à l'aide des explications qui vont suivre et des figures jointes parmi lesquelles:

la figure 1 illustre schématiquement l'architecture des différents moyens mis en oeuvre dans une barquette selon l'invention,

les figures 2 et 3 illustrent la position de la languette d'ouverture du pochon d'eau,

les figures 4 à 7 montrent différentes variantes de fermeture externe étanche de la dite barquette.

Pour plus de clarté, les mêmes éléments portent les mêmes références dans toutes les figures.

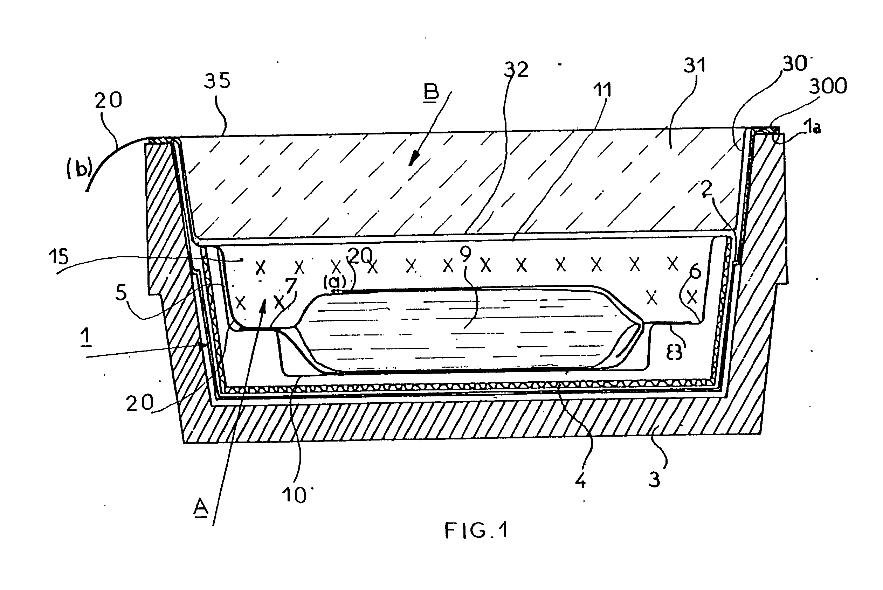

Comme le montre la figure 1, une barquette (1) comporte deux parties: la première (A) contenant le réchaud proprement dit, et la seconde (B) contenant le récipient alimentaire ou la conserve. Selon une caractéristique importante de l'invention, cette barquette (1) réalisée par exemple en polypropylène comporte un épaulement (2) qui sert de point d'appui lorsque cette barquette est introduite dans un emballage extérieur (3) réalisé par exemple en polystyrène dont la fonction est d'isoler thermiquement l'utilisateur de ladite barquette (1) lorsque le réchaud est en fonctionnement. Pour améliorer encore l'isolation thermique et selon une autre caractéristique de l'invention, l'intérieur de la barquette (1) est chemisé par un matériau également isolant, tel que du carton. Cette chemise (4) est en forme de boîte et repose sur le fond de la partie (A). Le réchaud proprement dit est constitué par un container (5) en aluminium enduit ou complexé. Celui-ci présente un épaulement (6) sur lequel viennent s'appuyer deux ailes (7) et (8) solidaires d'un pochon étanche (9) qui repose sur le fond (10) dudit container (5). Un opercule (11) ferme hermétiquement cette partie (A) correspondant au réchaud (5). Le pochon (9) contient l'un des produits réactifs, en l'occurence de l'eau, tandis que dans une partie du volume libre du réchaud (5) situé au-dessus du pochon (9) on dispose le second réactif, par exemple de la chauxvive (15).

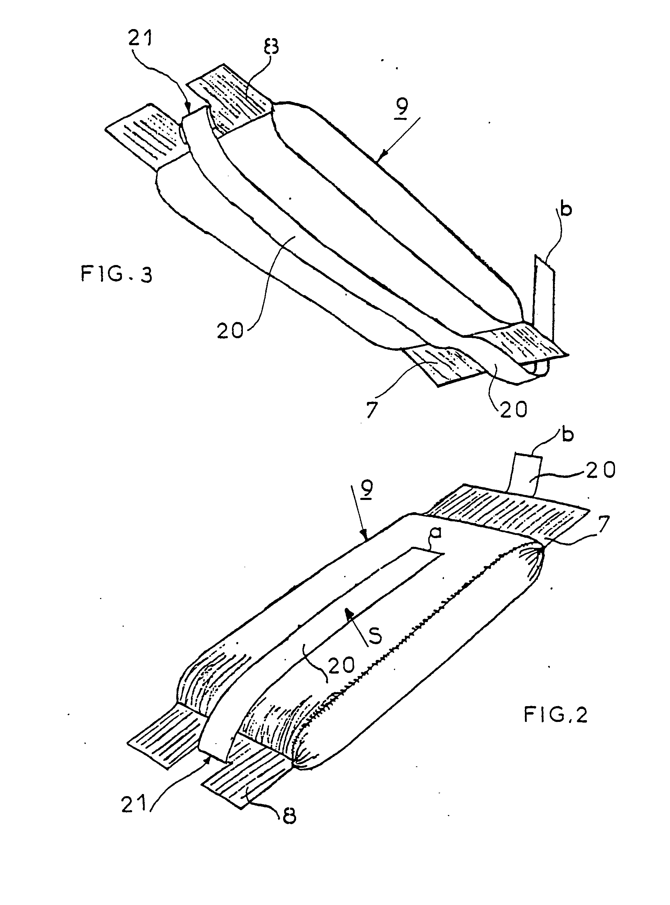

Selon une autre caractéristique importante de l'invention, et comme le montrent plus particulièrement les figures 2 et 3 représentant le pochon (9), vu respectivement du dessus et du dessous, le pochon (9) est équipé d'un ruban d'ouverture (20) qui le ceinture. Une extrémité (a) de ce ruban est collée ou soudée sur la partie supérieure du pochon au niveau d'une zone (S). Le ruban est replié d'un côté du pochon (9) dans lequel on a créé une zone de rupture (21). Ce ruban (20) contourne librement la face inférieure du pochon (9) pour s'échapper au-delà de l'autre aile vers l'extérieur. L'autre extrémité (b) du ruban (20) remonte donc (figure 1) vers l'extérieur du réchaud (5) en traversant, sans le détériorer, un premier joint d'étanchéité réalisé entre l'opercule (11) et le réchaud (5), ce joint étant par exemple réalisé en cire et permettant le libre glissement du ruban (20).

La partie (B) de la barquette (1) reçoit la conserve alimentaire (figure 1) ou le récipient (tous deux portant la référence 30) contenant le produit (31) à réchauffer, fermé pour la conserve par un couvercle préoperculé (35) et, pour le récipient par un couvercle (350), comme cela sera illustré sur les figures suivantes, l'un et l'autre constituant un isolement pour le produit à consommer (31) par rapport au milieu extérieur. Conformément à l'invention, le fond (32) de ce récipient ou de cette conserve (30) est en contact intime avec l'opercule (11) de fermeture du réchaud (5).

Pour plus de clarté, sur la figure 1, on a légèrement écarté le fond (32) et l'opercule (11) qui, en fait, sont superposés. Dans ces conditions, le réchauffement du produit à consommer est obtenu à la fois par conduction et par rayonnement.

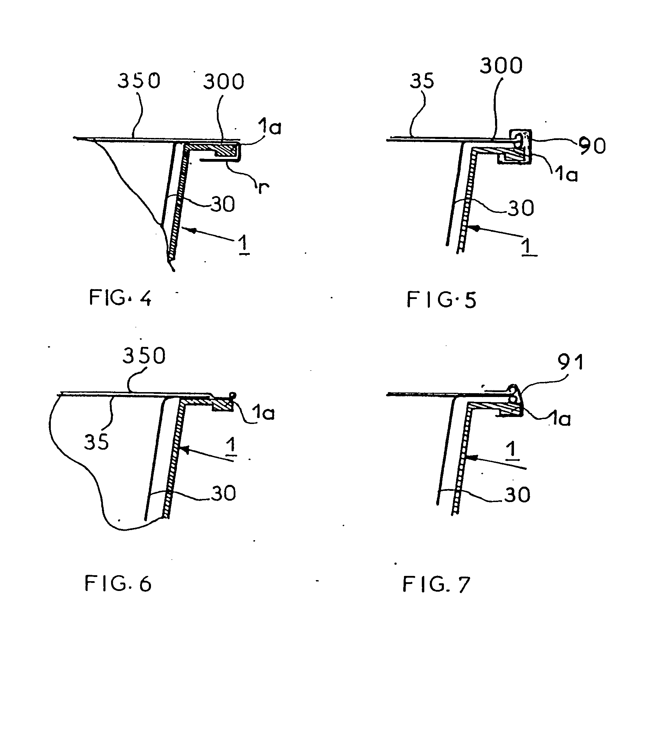

Ce récipient ou conserve (30), selon une caractéristique importante de l'invention, présente un profil complémentaire de celui de la barquette (1), et comporte au niveau de la fermeture un bord plat (300) qui permet un scellement étanche, techniquement facile à réaliser sur la périphérie (1a) de la barquette (1). Ces profils sont illustrés au moyen des figures 4 à 7 représentant à titre nullement limitatif, quatre variantes de scellement du récipient ou conserve (30) contenant le produit alimentaire (31), à la barquette (1) par l'intermédiaire desdits bords plats (300), sur la périphérie (1a) de cette barquette (1).

Une première variante (figure 4) consiste à prévoir un bord plat (300) au niveau du récipient (30), de telle sorte que l'on puisse le rabattre en (r) sur le pourtour (1a) de la barquette (1) avant d'effectuer le thermoscellage d'un couvercle extérieur (350) sur le pourtour (1a). Ce thermoscellage est réalisé sur des matériaux complexés.

Une seconde variante (figure 5) consiste en un surmoulage (90) par injection qui scelle les bords (300) du couvercle (35) de la conserve (30) au pourtour (1a) de la barquette (1).

Dans une troisième variante (figure 6), les bords du couvercle (350) débordent de la périphérie, ce qui permet un scellement simultané du récipient alimentaire (30) et des bords du couvercle sur la barquette (1).

Enfin, une quatrième variante consiste à mettre en oeuvre un sertissage mécanique (91).

Dans tous les cas, pour compléter l'étanchéité avec le milieu extérieur, un second joint d'étanchéité, constitué par exemple au moyen de cire, de mastic ou d'un matériau équivalent, est réalisé au niveau de la sortie du ruban (20) et du couvercle (35, 350).

De la description précédente ressortent bien les principales caractéristiques de la présente invention.

D'une part, la mise en contact thermique du fond du récipient alimentaire (30) et de l'opercule (11) permet la conduction de la chaleur. D'autre part, les matériaux utilisés pour la fabrication du réchaud (5) et de l'opercule (11) sont choisis dans la gamme des matériaux étant de bons conducteurs.

L'expérience montre en effet que, durant le cycle de réchauffement jusqu'au pic thermique qui se situe environ vers 12 à 15 minutes, l'émission de vapeur à 90°-100° n'apparaît que dans la première minute de la réaction exothermique. Cette vapeur, si elle agit seule, s'avère incapable d'élever la température du récipient alimentaire dans de bonnes conditions. En revanche, dans le dispositif selon l'invention, l'expansion de la chaux, durant la réaction, qui double de volume par rapport au volume initial, est mise à profit pour contribuer encore à la mise en contact de l'opercule (11) du fond (32). La température du mélange réactif atteignant des valeurs voisines de 300° à 330°, la masse de chaux chauffe alors sans difficulté le récipient alimentaire (30) et son contenu (31), toutes conditions étant égales par ailleurs (quantité de produit à chauffer, tassement de ce produit...).

Dans ces conditions, on peut, connaissant l'équation de la réaction, optimiser la quantité d'eau mise en jeu, d'autant plus que l'organe d'ouverture du pochon (9), à savoir le ruban (20), par sa conception et sa mise en oeuvre, permet la diffusion de l'eau sur la plus grande surface de chaux possible et de manière régulière. A titre d'exemple, la granulométrie de la chaux correspond à des grains supérieurs à 2 millimètres carré de section.

Le réchauffage est obtenu sans qu'il soit nécessaire de détruire même partiellement l'opercule (11) qui, au contraire, conserve son rôle de séparateur (sur tout autre plan que celui de la conduction thermique) entre le milieu réactif et l'élément à chauffer.

Ainsi, la vapeur d'eau est confinée au maximum et contribue, non pas à réchauffer l'aliment, mais au contraire à favoriser le bon déroulement de la réaction exothermique. Cette protection par l'opercule (11) permet de pallier de plus d'éventuels débordements de chaux en cas d'incident de manipulation.

Enfin, la mise en place de la chemise en carton (4) et de l'emballage extérieur (3) en polystyrène permet d'une part de conserver le maximum de calories à l'intérieur de la barquette, au bénéfice du réchauffement, et de permettre d'autre part, à l'utilisateur de manipuler celle-ci sans danger car la chaleur à l'extérieur de cet emballage reste inférieure à 60°.

Une telle barquette auto-chauffante, conforme à l'invention, trouve des applications autant au niveau des particuliers qu'au niveau de la restauration collective.

## Revendications

1. Barquette alimentaire (1) comportant un dispositif de réchauffage par réaction exothermique de deux produits réactifs, la dite barquette étant divisée en deux parties (A) et (B) recevant respectivement un réchaud (5) et un récipient alimentaire (30), séparés l'un de l'autre, mais en contact intime l'un avec l'autre au moyen d'une opercule (11) bon conducteur de la chaleur, le dit récipient alimentaire (30) épousant le profil intérieur de la partie (B) et étant lui-même fermé par un couvercle (35, 350) constituant de manière étanche un isolement entre le milieu extérieur et le contenu (31) du récipient alimentaire (30), barquette caractérisée en ce que le réchaud (5) contient à la fois le réactif et un pochon (9) d'eau muni de moyens d'ouverture (20), l'opercule (11) fermant hermétiquement le réchaud, l'opercule et les moyens d'ouverture (20) du pochon d'eau étant disposés d'une manière telle que l'enceinte du réchaud contenant le réactif et le pochon d'eau reste close après l'ouverture du pochon d'eau, de telle sorte que, dès le déclenchement de la réaction exothermique, cette opercule (11) confine la vapeur d'eau dans la dite enceinte du réchaud pour favoriser le bon déroulement de la réaction et est plaquée contre le fond du récipient alimentaire (30) sous l'action de la masse du mélange réactif en expansion, assurant de la sorte une bonne conduction des calories vers les aliments (31) contenus dans le récipient (30).

2. Barquette selon la revendication 1, caractérisée en ce que le profil du rebord (1a) constituant la périphérie de cette barquette (1) permet le scellement conjoint d'un bord plat (300) prolongeant le couvercle alimentaire (35, 350) sur tout le pourtour de ce rebord (1).

3. Barquette selon la revendication 2, caractérisée en ce que ce scellement est obtenu par rabattement du bord plat (300) du couvercle alimentaire (35) sur ce rebord (1a).

4. Barquette selon la revendication 2, caractérisée en ce que ce scellement est obtenu par thermoscellage d'un couvercle (350) qui déborde de la périphérie du récipient (30), rendant solidaires simultanément, le couvercle (350), le récipient (30) et la barquette (1).

5. Barquette (1) selon la revendication 2, caractérisée en ce que ce scellement est obtenu au moyen d'un surmoulage (90).

6. Barquette (1) selon la revendication 2, caractérisée en ce que ce scellement est obtenu par sertissage au moyen d'une couronne métallique (91).

7. Barquette (1) selon l'une des revendications précédentes, caractérisée en ce que le pochon (9) comporte une zone d'amorce de rupture (21); un ruban (20) dont l'extrémité est rendue solidaire du dessus du pochon (9) et contourne librement le fond de celui-ci avant de déboucher vers l'extérieur de la barquette (1); l'action sur l'extrémité (b) permettant la rupture du pochon (9), la libération du réactif qu'il contient et le déclenchement de la réaction exothermique.

8. Barquette (1) selon la revendication 7, caractérisée en ce qu'un joint assure l'étanchéité au niveau du passage du ruban (20), au niveau de la fermeture de la barquette (1) tout en permettant le glissement du dit ruban (20).

## Patentansprüche

1. Nahrungsmittel-Verpackungsschale (1) mit einer Vorrichtung zum Aufwärmen durch exotherme Reaktion zweier Reagenzsubstanzen, wobei diese Verpackungsschale in zwei Teile (A) und (B) unterteilt ist, von denen der eine eine Aufwärmeinrichtung (5) und der andere einen Nahrungsmittelbehälter (30) aufnimmt, die voneinander getrennt, jedoch untereinander in innigem Kontakt mittels eines gut wärmeleitenden Innendeckels (11) sind, wobei sich dieser Nahrungsmittelbehälter (30) an das Innenprofil des Teils (B) anschmiegt und selber durch einen Deckel (35, 350) verschlossen ist, der abdichtend eine Isolierung zwischen der Außenumgebung und dem Inhalt (31) des Nahrungsmittelbehälters (30) darstellt, wobei die Verpackungsschale dadurch gekennzeichnet ist, daß die Aufwärmeinrichtung (5) zugleich das Reagenz und eine Wassertasche (9) enthält, die mit Öffnungsmitteln (20) versehen ist, wobei der Innendeckel (11) die Aufwärmeinrichtung hermetisch verschließt, und der Innendeckel und die Öffnungsmittel (20) der Wassertasche so angeordnet sind, daß der das Reagenz und die Wassertasche enthaltende Raum der Aufwärmeinrichtung nach Öffnung der Wassertasche geschlossen bleibt, so daß gleich nach Auslösung der exothermen Reaktion dieser Innendeckel (11) den Wasserdampf in diesem Raum der Aufwärmeinrichtung zurückhält, um den guten Ablauf der Reaktion zu begünstigen, und unter der Wirkung der Masse des sich ausdehnenden Reagenzgemischs an den Boden des Nahrungsmittelbehälters (30) gepreßt wird, und auf diese Weise eine gute Leitung der Wärme zu den im Behälter (30) enthaltenen Nahrungsmitteln (31) hin gewährleistet.

2. Verpackungsschale nach Anspruch 1, dadurch gekennzeichnet, daß das Profil der den Umfang dieser Verpackungsschale (1) bildenden Randkante (1a) die eng verbundene Abdichtung eines den Nahrungsmitteldeckel (35, 350) verlängernden flachen Randes (300) auf dem ganzen Umfang dieser Randkante (1a) gestattet.

3. Verpackungsschale nach Anspruch 2, dadurch gekennzeichnet, daß diese Abdichtung durch Falten des flachen Randes (300) des Nahrungsmitteldeckels (35) um diese Randkante (1a) herum erreicht wird.

4. Verpackungsschale nach Anspruch 2, dadurch gekennzeichnet, daß die Abdichtung durch Heißsiegeln eines Deckels (350) erzielt wird, die über den Umfang des Behälters (30) herausragt, wobei gleichzeitig der Deckel (350), der Behälter (30) und die Verpackungsschale (1) fest verbunden werden.

5. Verpackungsschale (1) nach Anspruch 2, dadurch gekennzeichnet, daß diese Abdichtung mittels Spritzgießen (90) erfolgt.

6. Verpackungsschale (1) nach Anspruch 2, dadurch gekennzeichnet, daß diese Abdichtung durch Bördelung mittels einer Metallkrone (91) erzielt wird.

7. Verpackungsschale (1) nach einem der vorausgehenden Ansprüche, dadurch gekennzeichnet, daß die Tasche (9) einen Anrißbereich (21) umfaßt, ein Band (20), dessen Ende mit dem Oberteil der Tasche (9) fest verbunden ist und den Boden derselben frei umläuft, bevor es aus der Verpackungsschale (1) herausmündet, wobei die Einwirkung auf das Ende (b) den Riß der Tasche (9), die Freigabe des in ihm enthaltenen Reagenzes und die Auslösung der exothermen Reaktion gestattet.

8. Verpackungsschale (1) nach Anspruch 7, dadurch gekennzeichnet, daß ein Dichtungsmittel die Abdichtung in Höhe des Durchlaufs des Bandes (20) in gleicher Höhe mit dem Verschluß der Verpackungsschale (1) sichert und gleichzeitig das Durchgleiten dieses Bandes (20) gestattet.

**Claims**

1. A food receptacle (1) comprising a device for heating two reactive products by exothermic reaction, the said receptacle being divided into two parts (A) and (B) respectively containing a heater (5) and a food container (30) which are separated from one another but in intimate contact with one another by means of a cover (11) of good thermal conductivity, the said food container (30) matching the interior profile of the part (B) and itself being closed by a lid (35, 350) forming an insulation in a hermetic manner between the external environment and the contents (31) of the food container (30), the receptacle being characterised in that the heater (5) contains both the reactant and a water bag (9) provided with opening means (20), the cover (11) hermetically closing off the heater, the cover and the opening means (20) of the water bag being arranged in such a manner that the heater enclosure containing the reactant and the water bag remains shut after opening of the water bag, so that from the beginning of the exothermic reaction, this cover (11) retains the water vapour within the said heater enclosure to promote the good evolution of the reaction and is thrust against the bottom of the food container (30) under the action of the expanding mass of the reactive mixture, in this way assuring good conduction of calories to the foods (31) contained in the container (30).

2. A receptacle according to claim 1, characterised in that the profile of the flange (1a) forming the periphery of this receptacle (1) enables a flat rim (300) extending the food lid (35, 350) to be joined in a sealed manner throughout the periphery of this flange (1).

3. A receptacle according to claim 2, characterised in that this seal is produced by swaging the flat rim (300) of the food lid (35) over this flange (1a).

4. A receptacle according to claim 2, characterised in that the seal is produced by thermal bonding of a cover (350) which projects from the periphery of the container (30), simultaneously rendering integral, the cover (350), the container (30) and the receptacle (1).

5. A receptacle (1) according to claim 2, characterised in that the seal is produced by means of an over-moulding (90).

6. A receptacle (1) according to claim 2, characterised in that the seal is produced by crimping by means of a metal hoop (91).

7. A receptacle (1) according to one of the preceding claims, characterised in that the bag (9) comprises an area of incipient rupture (21); a tape (20) of which the extremity is rendered integral with the top of the bag (9) and freely embraces the bottom of the same before extending to the exterior of the receptacle (1); the action on the extremity (b) enabling rupture of the bag (9) release of the reactant which it contains and initiation of the exothermic reaction.

8. A receptacle (1) according to claim 7, characterised in that a joint assures air-tightness at the level of the passage of the tape (20), at the level of the closure of the receptacle (1) whilst enabling sliding of the said tape (20).

FIG.1

FIG.3

FIG.2

FIG· 4

FIG·5

FIG. 6

FIG. 7